# EUROPEAN PATENT SPECIFICATION

(11) **EP 1 994 319 B1**
(45) Date of publication and mention of the grant of the patent: **13.07.2016**
(21) Application number: 06708934.2
(22) Date of filing: 06.03.2006
(51) Int. Cl.: F16K 15/18, F16K 31/122, F04C 29/12

(54) **SUCTION VALVE**
SAUGVENTIL
VANNE D'ASPIRATION

(43) Date of publication of application: 26.11.2008
(73) Proprietor: PMC POLARTEKNIK OY AB, 32700 Huittinen (FI)
(72) Inventor: ROPPONEN, Vesa, FI-31900 Punkalaidun (FI)
(74) Representative: Kolster Oy Ab
(86) International application number: PCT/FI2006/000075
(87) International publication number: WO 2007/101901

(56) References cited:
- DE-A1- 1 775 356
- DE-A1- 3 210 790
- DE-A1- 19 721 356
- DE-C1- 4 023 845
- FI-A- 20 041 153
- GB-A- 1 552 987
- US-A- 3 134 394
- US-A- 3 888 280
- US-A- 4 638 832
- US-A- 4 747 426

## Description

The invention relates to a suction valve to be placed in a pipe line and intended for flow material, by means of which the flow can be closed, regulated and back flow prevented, whereby the suction valve comprises a movable locking means placed in the valve house and for it a counter face in the valve house and said locking means can be moved by means of the pressure of the flow material by forming the locking means to be as piston parts or cylinder parts in the working cylinder. The valve is especially suited as a suction valve for screw and rotor compressors, which causes quite a small loss of flow and can be regulated and which closes as needed. By closing the suction valve the back flow from the compressor is prevented when the compressor stops.

Previously known is, among others, a suction valve from patent publication US 6,695,007, where the flow of medium keeps the valve open. When the flow reduces, or for instance, while the suction effect of the compressor lessens, the spring in the valve pulls the closing means against the seat surface and closes the valve. In such a spring-retun valve a little more pressure loss always builds up, because, by means of the flow, the valve-closing means is kept open. Pressure loss builds up even if the spring would be as to its counter force quite week. When rather big compressors are working almost day and night, so already the slight deterioration of the operating efficiency, because of their suction valve, becomes a remarkable expense in the production of compressed air. In addition, it is difficult to regulate a suction valve returning by spring force into intermediate position near the closing state in order to achieve the relief state of compressor. Thus the relief must be done in closing the valve, while the compressor is working, which takes place either in adding the spring back factor or otherwise moving the closing means against the closing surface.

Earlier is known from US patent no. 3,134,394 a check valve in which the impact resulting from the opening or closing movement is minimized by the cushioning action of the fluid and at the same time the rate of the or closing movement is accelerated by the pressure of the fluid itself and in which the speed of this movement together with the cushioning action can be controlled from outside the valve casing.

In the solution above the pressure in the valve space impacts direct to the surfaces of the piston during both opening and closing cases of the valve without any by means of valve means separated pressure chamber locating in contact with said piston.

Further is known in pipelines used check valve from US patent no. 4,747,426, said valve comprising an inner housing with a chamber space. The pressure of the medium flow impacts freely inside the inner housing. The inner housing is formed of stationary and movable parts wherein the movable part is the closing part of the valve. The control system of the movable part is constructed inside the inner housing and functions of said system are based on pressure changes inside the inner housing.

In this solution there is not any valve controlling the flow of the pressure medium into the inner housing.

In order to improve the presented disadvantages and to achieve by compressor use, as to its flow loss a very small suction valve, a new suction valve intended for flow material is developed, which can be placed in a pipe line and the closing means of which can be moved by means of the pressure of the flow material in forming the closing means to be as a piston or a cylinder part in a working cylinder which operates by means of the pressure of the flow material. The above presented invention is characterized in that the pressure of flow medium, necessary for moving locking means, is led into said locking means through an outlet valve, which outlet valve is fitted inside the locking means and said outlet valve including a tap hole which is open to a downstream portion of the medium flow in the valve housing, and that said outlet valve further includes a closing flap which, when the downstream pressure of the flow medium is led to the outlet valve, closes the tap hole so that the movable locking means moves to the closed position.

The advantage of the invention is that the keeping of the valve open it does not cause any flow loss in the valve. The valve remains open both due to its mass by means of force of gravity and by means of the compressor's suction pressure, said pressure is allowed to impact in a cylinder space formed by closing means into a direction pulling the closing means into open position. The compressor must only one time suck the negative pressure through the outlet valve into said space, and afterwards no loss on keeping the valve open takes place. Control of the outlet valve fitted inside the closing means of the suction valve takes place with the pressure of medium led to it. Closing and opening of the suction valve is steered to take place by pressurized available medium. Thus control takes place in spite of the compressor running. When the closing valve is as to its inlet opening installed upwards, the closing means facilitates by means of its own mass the opening of the suction valve. The closing means can also be regulated to any intermediate place between close and open positions. By means of the outlet valve motions from closed state to open state of the closing means can be made quite fast, when the pressure of medium that presses the closing means to the closed position discharges fast through the outlet valve to the suction tube of the compressor. The suction valve causes very little pressure loss to the.flow passing it, since it is possible to make the formatting of the income and exit sides very streamlined.

In the following the invention is disclosed with reference to the enclosed drawing, where
Fig. 1 shows a section view from the side of the valve open according to the invention.
Fig. 2 shows the valve in closed position,
Fig. 3 the valve connection diagrammatically.

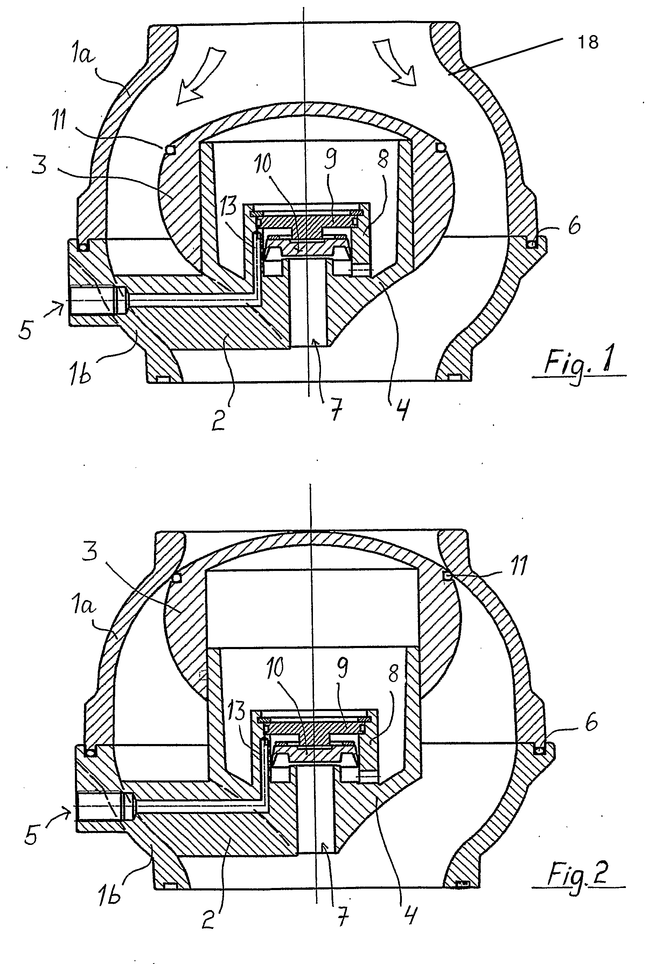

Figure 1 shows a suction valve, the outer casing of which is formed of two joined parts 1a and 1b, which can be attached to each other with bolts through holes 6. Connected to other part 1b, by means of wings 2 led across the circular flow channel, the fixed circular sleeve-like portion 4 of the closing means is fixed, the outer surface of which is fitted to work as a sliding surface together with part 3. Parts 3 and 4 are like a cylinder and a piston, which move in regard to each other. Part 3 is furnished with packing 11 and nestles in closing situation against the counter surface of part 1a, while packing 11 is compressing closing. A wing 2, which connects portion 4 to part 1b is a little thicker, whereby it is possible to lead through it a channel 5 from the outside into the part 4.

The outlet valve is fixed inside sleeve-like part 4 by threaded coupling 12. The outlet valve has a tap hole 7, which leads directly to the suction space of the compressor. Furthermore, it comprises in the cylindrical frame 8 of the valve moving a closing flange 10, which is of flexible material, as polyurethane. To the frame 8 a supporting flange 9 is connected. The closing flange 10 closes tap hole 7, if the pressure behind the closing flange 10, led along channel 5 and further along 13, is greater than the pressure in the tap hole 7. The pressure of the tap hole 7 dominates also inside closing means 3 and part 4 in the cylinder space. In the state described in the figure 1 no pressure is led through the channel 5 to the outlet valve. For instance, channel 5 can also be joined to same pressure with the compressor suction side, in other words to a chamber into which the tap hole 7 discharges. The closing means 3 stays in the state shown by figure 1 and does not try get closed. Thus the flow losses caused by the closing means are minimized.

The situation of figure 2 can be reached both on compressor stopping and working. For instance, from the compressor's pressure side control pressure is led behind the closing flange 10 of the outlet valve, whereby it moves to close the tap hole 7. The material of closing flange 10 gives in, so that pressure can get, by the way of the flexing outer edge of flange 10, into the cylinder space to circulate inside the closing means 3, and the pressure pushes the closing means 3 to closed position. Now the compressor runs relieved or it is stopped. The pressure cannot get discharged backward off the compressor.

If wanted to get the suction valve open, it happens very fast, since the control pressure of channel 5 is led out, which is a very small amount of air. Then in the cylinder space the pressure from the inside of the closing means 3 is at once able to push closing flange 10 of the closing means 3 a little to the left, whereby the pressure from the inside of the closing means 3 quickly discharges through the tap hole 7 into the suction space of the starting compressor and the closing flange 10 remains in the position shown by figure 1. Inside the closing means 3 negative pressure sucked by the compressor arises and the closing means 3 move quickly to open-position and the flow can pass the valve. So the running of the compressor or its starting accelerates the opening of valve. Further, the opening of valve is especially accelerated by the position of the suction valve, if it is according to the figures 1 and 2, whereby the closing means 3 moves downward to open-position, assisted by force of gravity.

It is also possible to get for the closing means 3 adjusted intermediate positions in the position of the quick outlet valve according to figure 2 by leading through channel 5 only a regulated amount of medium into the space formed between the closing means 3 and the part 4.

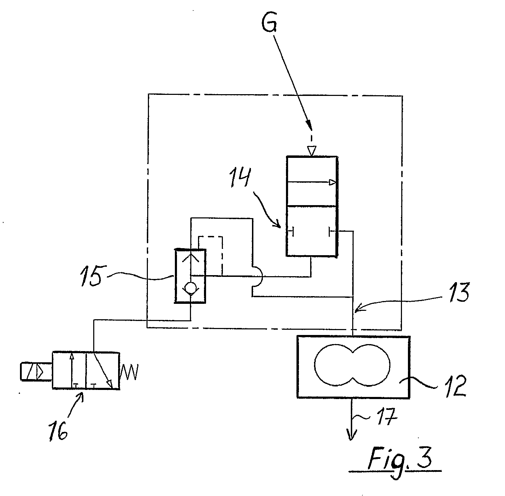

Figure 3 shows the main diagram of the valve. Valve 14 is a suction valve, comprising in figures 1 and 2 parts 1a and 3. Valve 15 is an outlet valve comprising in figures 1 and 2 parts 8, 9 and 10. Valve 16 is a control valve, by means of the opening of which the pressure is led to the outlet valve 15 and this causes that the suction valve 14 closes in spite of the running of compressor 12. The control pressure runs through the outlet valve into the closing means 3 and lifts up the closing means and the suction valve closes. When the pressure control of the valve 16 is removed, the low pressure or suction in the suction line 13 leading to the compressor, removes pressure from the inside of the closing means 3, and it gets down, which situation is the open position of the suction valve. The pressure line starting from compressor 12 has the reference number 17. The inlet opening of the suction valve in the diagram shown in figure 3 is described by the reference number 14. From compressor 13 pressure line 17 control pressure can be taken to the valve 16. It is also possible to take control pressure from some other outside pressure source.

## Claims

1. A suction valve to be placed in a pipe line and intended for flowing a medium, by means of which valve the flow can be closed, regulated and back flow prevented, whereby the suction valve comprises:
- a valve housing (1) through which the medium flows, said valve housing including a counter seating face (18) which surrounds an upstream portion of the medium flow in the valve housing and a stationary part (4) in the valve housing (1);
- movable locking means (3) placed in the valve housing (1) and for it the counter seating face (18) in the valve housing (1) wherein said locking means (3) can be moved by means of the pressure of the flow medium by forming said movable locking means (3) to be as piston parts or cylinder parts in a working cylinder, **characterized in that**
- the pressure of flow medium, necessary for moving locking means (3), is led into said locking means through an outlet valve (8, 9, 10), which outlet valve is fitted inside the locking means (3) and said outlet valve including a tap hole (7) which is open to a downstream portion of the medium flow in the valve housing, and that
- said outlet valve further includes a closing flap (10) which, when the downstream pressure of the flow medium is led to the outlet valve, closes the tap hole (7) so that the movable locking means (3) moves to the closed position.

2. A suction valve according to claim 1, **characterized in that** by selected use position of the suction valve, force of gravity is utilized to move the movable locking means (3) to the open position.

3. A suction valve according to claim 1, **characterized in that** when the movable locking means (3) is in the closed position, a reduction of the downstream pressure of the flow medium led to the outlet valve causes the tap hole (7) of outlet valve to open which results in the movable locking part (3) moving from the closed to the open position.

4. A suction valve according to claim 1, **characterized in that** the movable locking means (3) is a moving cylinder, which is movable relative to the stationary part (4) which is a sleeve-like piston (4).

5. A suction valve according to claim 1, **characterized in that** the outlet valve (8),(9), (10) is located inside of the sleeve-like piston (4).

## Patentansprüche

1. Saugventil, das in einer Rohrleitung zu positionieren ist und für das Fließen eines Mediums vorgesehen ist, durch welches Ventil der Fluss abgeschlossen, geregelt und Rückfluss verhindert werden kann, wobei das Saugventil aufweist:
- ein Ventilgehäuse (1), durch das das Medium fließt, welches Ventilgehäuse eine Gegensitzfläche (18) umfasst, die einen flussaufwärts liegenden Abschnitt des Mediumflusses im Ventilgehäuse und ein stationäres Teil (4) im Ventilgehäuse (1) umgibt;
- im Ventilgehäuse (1) positionierte bewegliche Verriegelungsmittel (3) und die Gegensitzfläche (18) für sie im Ventilgehäuse (1), worin die besagten Verriegelungsmittel (3) durch den Druck des Flussmediums bewegt werden können, indem die besagten beweglichen Verriegelungsmittel (3) als Kolbenteile oder Zylinderteile in einem Arbeitszylinder ausgebildet werden, dadurch **gekenn**- **zeichnet,** dass
- der Druck des Flussmediums, der für das Bewegen der Verriegelungsmittel (3) erforderlich ist, in die besagten Verriegelungsmittel durch ein Auslassventil (8, 9, 10) geführt wird, welches Auslassventil innerhalb der Verriegelungsmittel (3) angepasst ist und welches besagte Auslassventil ein Ablassloch (7) umfasst, das offen auf einen flussabwärts liegenden Abschnitt des Mediumflusses im Ventilgehäuse ist, und dass
- das besagte Auslassventil ferner eine Abschlussklappe (10) umfasst, die das Ablassloch (7) abschließt, wenn der flussabwärts liegende Druck des Flussmediums zum Auslassventil geführt wird, so dass sich die beweglichen Verriegelungsmittel (3) in die geschlossene Position bewegen.

2. Saugventil nach Patentanspruch 1, **dadurch gekennzeichnet, dass** durch die ausgewählte Betriebsposition des Saugventils die Schwerkraft dafür verwendet wird, die beweglichen Verriegelungsmittel (3) in die offene Position zu bewegen.

3. Saugventil nach Patentanspruch 1, **dadurch gekennzeichnet, dass**, wenn die beweglichen Verriegelungsmittel (3) in der geschlossenen Position sind, die Verringerung des flussabwärts liegenden Drucks des zum Auslassventil geführten Flussmediums das Öffnen des Ablasslochs (7) des Auslassventils verursacht, was dazu führt, dass sich das bewegliche Verriegelungsteil (3) von der geschlossenen in die offene Position bewegt.

4. Saugventil nach Patentanspruch 1, **dadurch gekennzeichnet, dass** die beweglichen Verriegelungsmittel (3) ein beweglicher Zylinder sind, der in Bezug auf das stationäre Teil (4), das ein hülsenartiger Kolben (4) ist, beweglich ist.

5. Saugventil nach Patentanspruch 1, **dadurch gekennzeichnet, dass** sich das Auslassventil (8), (9), (10) innerhalb des hülsenartigen Kolbens (4) befindet.

## Revendications

1. Vanne d'aspiration destinée à être placée dans une canalisation et prévue pour laisser s'écouler un milieu, au moyen de laquelle vanne l'écoulement peut être arrêté, régulé et le refoulement empêché, moyennant quoi la vanne d'aspiration comprend :
- un boîtier de vanne (1) à travers lequel le milieu s'écoule, ledit boîtier de vanne comprenant une face de contre-appui (18) qui entoure une partie en amont de l'écoulement de milieu dans le boîtier de vanne et une partie fixe (4) dans le boîtier de vanne (1) ;
- un moyen de verrouillage mobile (3) placé dans le boîtier de vanne (1) et pour ce dernier, la face de contre-appui (18) dans le boîtier de vanne (1), dans laquelle ledit moyen de verrouillage (3) peut être déplacé au moyen de la pression du milieu d'écoulement en formant ledit moyen de verrouillage (3) mobile comme des parties de piston ou des parties de cylindre dans un cylindre de travail, **caractérisée en ce que**
- la pression du milieu d'écoulement, nécessaire pour déplacer le moyen de verrouillage (3), est amenée dans ledit moyen de verrouillage par une vanne de sortie (8, 9, 10), laquelle vanne de sortie est montée à l'intérieur du moyen de verrouillage (3) et ladite vanne de sortie comprenant un trou de coulée (7) qui est ouvert vers une partie en aval de l'écoulement de milieu dans le boîtier de vanne, et **en ce que**
- ladite vanne de sortie comprend en outre un volet de fermeture (10) qui, lorsque la pression en aval du milieu d'écoulement est amenée à la vanne de sortie, ferme le trou de coulée (7) de sorte que le moyen de verrouillage (3) mobile passe dans la position fermée.

2. Vanne d'aspiration selon la revendication 1, **caractérisée en ce qu'**en sélectionnant la position d'utilisation de la vanne d'aspiration, la force de gravité est utilisée pour faire passer le moyen de verrouillage (3) mobile dans la position ouverte.

3. Vanne d'aspiration selon la revendication 1, **caractérisée en ce que**, lorsque le moyen de verrouillage (3) mobile est dans la position fermée, une réduction de la pression en aval du milieu d'écoulement amené à la vanne de sortie provoque l'ouverture du trou de coulée (7) de la vanne de sortie, ce qui se traduit par la partie de verrouillage (3) mobile qui passe de la position fermée à la position ouverte.

4. Vanne d'aspiration selon la revendication 1, **caractérisée en ce que** le moyen de verrouillage (3) mobile est un cylindre mobile, qui est mobile par rapport à la partie fixe (4) qui est un piston en forme de manchon (4).

5. Vanne d'aspiration selon la revendication 1, **caractérisée en ce que** la vanne de sortie (8), (9), (10) est positionnée à l'intérieur du piston en forme de manchon (4).
